# EUROPEAN PATENT APPLICATION

(11) **EP 2 613 243 A2**
(43) Date of publication of application: **10.07.2013**
(21) Application number: 13150671.9
(22) Date of filing: 09.01.2013
(51) Int. Cl.: G06F 3/0486, H04N 21/422, H04N 21/482, H04N 21/485, G06F 3/0346, G06F 3/0481

(54) **Display apparatus and controlling method thereof**

(30) Priority: 09.01.2012 KR 20120002639
(71) Applicant: Samsung Electronics Co., Ltd., Gyeonggi-do 443-742 (KR)
(72) Inventor: Bae, DK, Gyeonggi-do (KR); You, Ho Jeong, Gyeonggi-do (KR)
(74) Representative: Davies, Robert Ean

(57) **Abstract**

A display apparatus includes an image acquiring unit configured to acquire a user image, an image processing unit configured to sense a motion of a user from the user image, and a control unit configured to control a pointer displayed on a screen of the display apparatus to be moved to a target position in response to the sensed motion of the user, and control the screen to be scrolled according to the target position.

## Description

### BACKGROUND

### 1. Field

Exemplary embodiments of the present invention relate to a display apparatus configured to display a pointer on a screen and to move the pointer according to the motion of a user, and a controlling method thereof.

### 2. Description of the Related Art

In general, a display apparatus is an apparatus configured to display an image by processing an image signal, and a television (TV) is an example of a typical display apparatus. In recent years, with the development of smart TVs, in addition to broadcasting, computer functions such as a VOD (Video on Demand), games, a video call, and other applications are being provided to users through the smart TV.

As a remote controlling apparatus configured for the convenience of a user, a remote controller is being used, and a user, by using the remote controller which is wirelessly connected to a TV, may change the channels of the TV or adjust the volume of the TV. In addition, a user may be able to control the TV through electronic devices such as a smart phone and a PC that are wirelessly connected to the TV, instead of using the remote controller. In addition, as remote controlling technology is being developed, a function capable of recognizing the voice of a user, or a function capable of recognizing the gesture of a user according to the motion of the user, is being implemented in the TV.

Meanwhile, the smart TV is configured to support a GUI (Graphic User Interface) for a user to control the TV, and as the user manipulates the remote controlling apparatus, a pointer being displayed on the screen of the TV is being moved. Accordingly, the user, by moving the pointer to the position of a channel button or a volume button being displayed on the screen of the TV and by selecting the channel button or the volume button, may adjust the channel or the volume of the TV.

### SUMMARY

Therefore, it is an aim of exemplary embodiments disclosed herein to provide a display apparatus configured to move a pointer in response to the motion of a user and to move the pointer in at least one moving domain, and a controlling method thereof.

In addition, it is another aim of exemplary embodiments disclosed herein to provide a display apparatus configured to perform a wheel function according to the position of the pointer and the moving direction of the pointer, and a controlling method thereof.

Additional aspects of the exemplary embodiments will be set forth in part in the description which follows and, in part, will be obvious from the description, or may be learned by practice of the exemplary embodiments.

In accordance with an aspect of the invention, there is provided a display apparatus, comprising an image acquiring unit configured to acquire a user image; an image processing unit configured to sense a motion of a user from the user image, and a control unit configured to control a pointer displayed on a screen of the display apparatus to be moved to a target position in response to the sensed motion of the user, and control the screen to be scrolled according to the target position.

The control unit may be further configured to control the screen to be scrolled according to the target position when the pointer is positioned at the reference domain of the screen for a period of time exceeding a reference time.

The control unit may be further configured to fix a position of the pointer and control the screen to be scrolled according to the target position.

In accordance with another aspect of the invention, there is provided a display apparatus, comprising: an image acquiring unit configured to acquire a user image; an image processing unit configured to sense a motion of a user from the user image, and a control unit configured to control a pointer displayed on a screen of the display apparatus to be moved to a target position in response to the sensed motion of the user.

When the target position is deviated from at least one moving domain in which the pointer is located, the control unit may be further configured to control the pointer to be moved to at least one other moving domain.

When the target position is positioned in a reference domain among a plurality of reference domains that are positioned at an outer portion of the at least one moving domain, the control unit may determine a moving direction of the pointer according to a position of the at least one reference domain in which the target position is positioned.

When the target position is positioned at an edge of a reference domain that is positioned at an inner portion of the at least one moving domain, the control unit may determine a moving direction of the pointer according to a position of the edge of the reference domain.

In accordance with another aspect of the invention, there is provided a display apparatus, comprising: an image acquiring unit configured to acquire a user image; an image processing unit configured to sense a motion of a user from the user image, and a control unit configured to control a pointer displayed on a screen of the display apparatus to be moved to a target position at an edge of the screen in response to the sensed motion of the user, and further configured to control a page of the screen to be moved when the pointer is positioned at the edge of the screen.

The control unit may be further configured to control the page of the screen to be moved according to a position of the pointer when the pointer is positioned at the edge of the screen for a period of time exceeding a reference time.

When the pointer is positioned at a left side edge or at an upper side edge of the screen, the control unit may be further configured to control the page of the screen to move to a previous page, and when the pointer is positioned at a right side edge or at a lower side edge of the screen, the control unit may be further configured to move the page of the screen to a next page.

In accordance with another aspect of the invention, there is provided a display apparatus, comprising: an image acquiring unit configured to acquire a user image; an image processing unit configured to sense a motion of a user from the user image, and a control unit configured to control a pointer being displayed on a screen of the display apparatus to be moved to a target position in a first reference domain in response to the sensed motion of the user, and control at least one button to be displayed in the first reference domain when the pointer is positioned in the first reference domain of the screen.

When the pointer is positioned at a second reference domain of the screen after the at least one button is selected, the control unit may be further configured to control the screen to be zoomed according to the target position.

When the pointer is positioned at the second reference domain of the screen for a period of time exceeding a reference time, the control unit may be further configured to control the screen to be zoomed according to the target position.

The control unit may be further configured to fix a position of the pointer, and control the screen to be zoomed according to the target position.

In accordance with another aspect of the present invention, there is provided a display apparatus, comprising: an image sensor which tracks movement of a user gesture; a screen which displays a plurality of buttons and a pointer; and a controller which controls the pointer to automatically jump from a first one of the buttons to a second one of the buttons based on the tracked movement.

Preferably the controller controls the pointer to automatically jump from the first one of the buttons to the second one of the buttons based on the tracked movement indicating that the user gesture is moving the pointer towards the second button among the plurality of the buttons.

Preferably the image sensor tracks the movement using motion vectors from obtained images of the user gesture.

Preferably the user gesture is hand movement.

In accordance with another aspect of the invention there is provided A method of controlling a display apparatus, the method comprising: sensing a motion of a user from a user image; moving a pointer being displayed on a screen to a target position in response to the sensed motion of the user; and moving, when the target position is deviated from at least one moving domain, the pointer to at least one other moving domain.

The moving of the pointer to the at least one other moving domain may include, when the target position is positioned on at least one reference domain among a plurality of reference domains that are positioned at an outer portion of the at least one moving domain, determining a moving direction of the pointer according to a position of the at least one reference domain.

The moving of the pointer to the at least one other moving domain may include, when the target position is positioned on an edge of a reference domain that is positioned at an inner portion of the at least one moving domain, determining a moving direction of the pointer according to a position of the edge of the reference domain.

In accordance with another aspect of the invention, there is provided a method of controlling a display apparatus, the method comprising: sensing a motion of a user from a user image; moving a pointer displayed on a screen to a target position at an edge of the screen in response to the sensed motion of a user; and moving a page of the screen when the pointer is positioned at the edge of the screen.

The moving of the page of the screen may include, when the pointer is positioned at the edge of the screen for a period of time exceeding a reference time, moving the page of the screen according to a position of the pointer.

In accordance with another aspect of the invention, there is provided a method of controlling a display apparatus, the method comprising: sensing a motion of a user from a user image; moving a pointer displayed on a screen to a target position in response to the sensed motion of the user ; and scrolling the screen according to the target position.

The scrolling of the screen may include fixing a position of the pointer.

In accordance with another aspect of the invention, there is provided a method of controlling a display apparatus, the method comprising: sensing a motion of a user from a user image; moving a pointer displayed on a screen to a target position in a first reference domain in response to the sensed motion of the user; displaying at least one button in the first reference domain when the pointer is positioned i the first reference domain of the screen; and zooming the screen according to another target position when the pointer is positioned at a second reference domain of the screen for a period of time exceeding a reference time after the at least one button is selected.

The zooming of the screen may include fixing a position of the pointer.

As described above, a pointer, which is moved in at least one moving domain, is immediately moved to at least one other moving domain when a target position is deviated from the at least one moving domain, so that a user may be able to reduce the effort and the time in moving the pointer used to manipulate a display apparatus. In addition, a wheel function is performed according to the position and the moving direction of the pointer, and thus, even when a peripheral device such as a mouse is not connected to the display apparatus, a page scroll, a wheel scroll, and a zoom function may be able to be performed through a simple motion of a user.

According to the present invention there is provided an apparatus and method as set forth in the appended claims. Other features of the invention will be apparent from the dependent claims, and the description which follows.

### BRIEF DESCRIPTION OF THE DRAWINGS

For a better understanding of the invention, and to show how embodiments of the same may be carried into effect, reference will now be made, by way of example, to the accompanying diagrammatic drawings in which:
FIG. 1 is a front view illustrating an exterior appearance of a display apparatus in accordance with an exemplary embodiment;
FIG. 2 is a block diagram illustrating the display apparatus of FIG. 1;
FIG. 3 is a flow chart illustrating a method of sensing the motion of a user of the display apparatus of FIG. 1 according to an exemplary embodiment;
FIG. 4 is a drawing illustrating an example of moving a pointer of the display apparatus of FIG. 1 according to an exemplary embodiment;
FIG. 5 is a flow chart illustrating a method of moving the pointer of the display apparatus of FIG. 1 according to an exemplary embodiment;
FIG. 6 is a drawing illustrating an example of moving the pointer in a moving domain of the display apparatus of FIG. 1 according to an exemplary embodiment;
FIG. 7 is a drawing illustrating an example of determining the jump-moving direction of the pointer of the display apparatus of FIG. 1 according to an exemplary embodiment;
FIG. 8 is a drawing illustrating another example of determining the jump-moving direction of the pointer of the display apparatus of FIG 1 according to an exemplary embodiment;
FIGS. 9 to 10 are drawings illustrating a graphic effect in a case when the pointer of the display apparatus of FIG. 1 is jump-moved according to an exemplary embodiment;
FIG. 11 is a flow chart illustrating a method of moving the page of a screen of the display apparatus of FIG. 1 according to an exemplary embodiment;
FIG. 12 is a drawing illustrating an example of the pointer of the display apparatus being positioned at an edge of the screen of the display apparatus of FIG. 1 according to an exemplary embodiment;
FIGS. 13 to 14 are drawings illustrating a graphic effect in a case when the page of the screen of the display apparatus of FIG. 1 is being moved according to an exemplary embodiment;
FIG. 15 is a flow chart illustrating a method of scrolling the screen of the display apparatus of FIG. 1 according to an exemplary embodiment;
FIG. 16 is a drawing illustrating an example of the pointer of the display apparatus of FIG. 1 being positioned at a reference domain according to an exemplary embodiment;
FIGS. 17 to 18 are drawings illustrating a graphic effect in a case when the page of the screen of the display apparatus of FIG. 1 is being scrolled according to an exemplary embodiment;
FIG. 19 is a flow chart illustrating a method of performing a wheel scroll function in a state when a button of the display apparatus of FIG. 1 is being selected according to an exemplary embodiment;
FIG. 20 is a drawing illustrating a first reference domain at which the pointer of the display apparatus of FIG. 1 is not positioned frequently according to an exemplary embodiment;
FIG. 21 is a drawing illustrating a button that is being displayed on the screen of the display apparatus of FIG. 1 according to an exemplary embodiment; and
FIGS. 22 to 23 are drawings illustrating an example of a zoom function of the pointer of the display apparatus of FIG. 1 being performed according to an exemplary embodiment.

### DETAILED DESCRIPTION

Reference will now be made in detail to the exemplary embodiments, examples of which are illustrated in the accompanying drawings, wherein like reference numerals refer to like elements throughout.

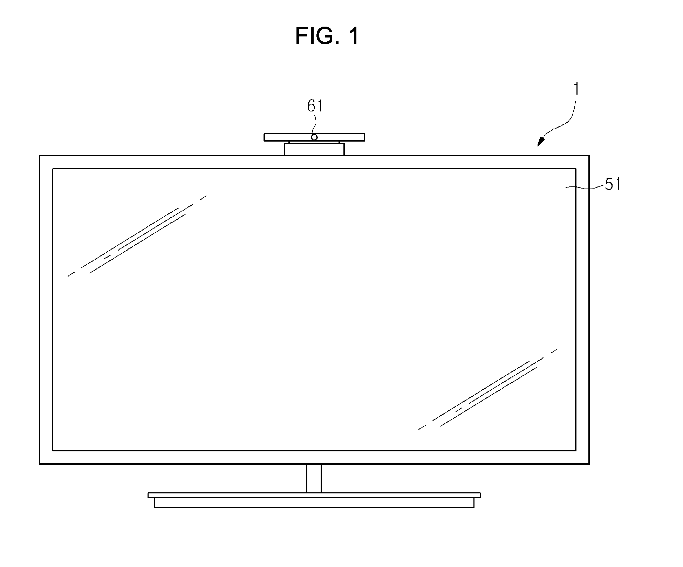

FIG. 1 is a front view illustrating an exterior appearance of a display apparatus in accordance with an exemplary embodiment.

Referring to FIG. 1, a screen 51 on which an image is displayed is provided at a front surface of a display apparatus 1. An image sensor 61 is installed at an upper end of the display apparatus 1, and the image sensor 61 acquires an image with respect to a front of the display apparatus 1. According to exemplary embodiments, the image sensor 61 may be composed of a complementary metal oxide-semiconductor (CMOS) sensor or a charge coupled device (CCD) sensor to acquire digital image data. In addition, the image sensor 61 may include a camera to acquire analog image data, and an analog-digital converter to convert analog image data into digital image data. The image sensor 61 may be installed at an upper end of the display apparatus 1 in a built-in manner, or may be mounted at an upper end of the display apparatus 1 as an external component.

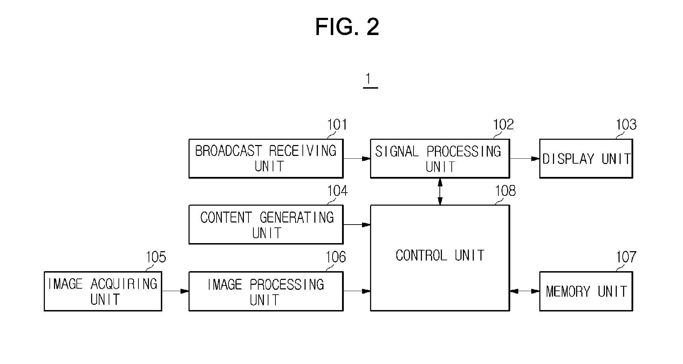

FIG. 2 is a block diagram illustrating the display apparatus of FIG. 1.

Referring to FIG. 2, the display apparatus 1 includes a broadcast receiving unit 101, a signal processing unit 102, a display unit 103, a content generating unit 104, an image acquiring unit 105, an image processing unit 106, a memory unit 107, and a control unit 108.

The broadcast receiving unit 101 is configured to receive a broadcast signal. According to exemplary embodiments, the broadcast signal includes at least one of an image signal, a speech signal, and a data signal, and may be a ground wave broadcast signal being delivered as a radio wave, a cable broadcast signal being delivered through a cable, or a satellite broadcast signal being delivered through a satellite.

The signal processing unit 102 processes a received signal, and reconstructs the received signal into image data and speech data. For example, the signal processing unit 102 performs a processing operation, such as a decoding operation or a scaling operation, on a received broadcast signal. The signal processing unit 102 processes image data so that a pointer may be displayed on the screen 51 of the display apparatus 1. In addition, the signal processing unit 102 generates a Ul (User Interface) so that the Ul may be displayed on the screen 51 of the display apparatus 1 together with the pointer.

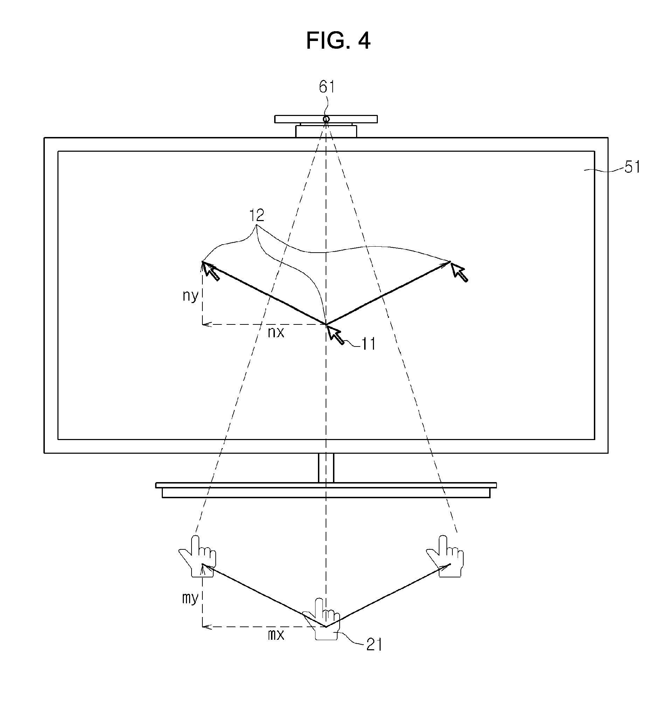

The display unit 103 displays an image, a pointer, and a Ul on the screen 51 of the display apparatus 1 based on the received image data. According to exemplary embodiments, a pointer 11 (FIG. 4) is displayed on the screen 51 at the position that corresponds to the position of the hand of a user. The display unit 103 may be implemented as many types, for example, a CRT (Cathode Ray Tube), an LCD (Liquid Crystal Display), and a PDP (Plasma Display Panel).

The content generating unit 104 generates a content signal based on the data stored at the display apparatus 1, or based on the data stored at a server that is connected through a network. According to exemplary embodiments, the content may include a movie, a television show, other types of videos, a game, a cartoon, a document, or an image. The content signal is reconstructed into image data and speech data by the signal processing unit 102, and the reconstructed image data may be displayed on the screen 51 of the display apparatus 1 by the display unit 103.

The image acquiring unit 105 (also referred to as an "image acquirer") acquires a user image that is positioned at a front of the display apparatus 1 by driving the image sensor 61. The user image acquired at the image acquiring unit 105 is transmitted to the image processing unit 106 as image data in frame units.

The image processing unit 106 senses the motion of a user by analyzing the user image. To analyze the user image, according to exemplary embodiments, the image processing unit 106 detects a motion vector of the domain at which motion is present on the user image. As for a method of detecting the motion vector, various methods may be implemented using technology known to those skilled in the art, and as one example, the image processing unit 106 may be able to detect the motion vector through a difference operation of two consecutive image frames.

According to exemplary embodiments, a user may make motions by using his or her hand so that large and natural motions may be expressed. Hereinafter, in the exemplary embodiment, a case of sensing the motion of the hand of a user will be described. It is understood, however, that other types of motion instead of or in addition to hand motions may also be used according to other exemplary embodiments.

The image processing unit 106, in order to distinguish the motion of other portions of a body from the hand, may limit the size of the domain, which is configured to detect the motion vector, to the size of the hand, and in a case when the domain being detected with the motion vector is more than two, the other domain, which is not the size of the hand, may be considered to be other portions of the body.

In addition, the image processing unit 106 compares the size of the detected motion vector with a predetermined threshold value, and in a case when the size of the detected motion vector is larger than the predetermined threshold value as indicated by a result of the comparison, the detected motion vector is determined to be valid. Accordingly, the image processing unit 106 may sense the motion of the hand of a user as a valid motion only in a case when the user's hand is moved across a range which is larger than a predetermined range.

The image processing unit 106 determines the size and the direction of the motion of the hand of a user by analyzing the valid motion vector. For the above, the image processing unit 106 may distinguish the motion vector into a vertical component and a horizontal component. Here, the vertical component corresponds to a y-axis component on a coordinate system, and the horizontal component corresponds to an x-axis component on a coordinate system. The image processing unit 106, by calculating the size of the vertical component and the size of the horizontal component, may be able to determine the size of the motion of the hand of a user. In addition, the image processing unit 106 may be able to determine the direction of the hand of a user through the sum of the vertical component and the horizontal component.

At the memory unit 107, a control program configured to drive the display apparatus 1 and the data generated according to the execution of the control program are stored. According to exemplary embodiments, the memory unit 107 may be implemented as one of a non-volatile memory apparatus such as an EEPROM (Electrically Erasable Programmable ROM), an EPROM (Erasable Programmable Read Only Memory), and a flash memory.

The control unit 108 (also referred to as a "controller") controls the overall operation of the display apparatus 1 according to the control program.

The control unit 108 analyzes the user image, and is configured in a way that the pointer 11 is displayed at the position that corresponds to the position of the hand 21 of a user. The control unit 108 is configured in a way that the pointer 11 displayed on the screen 51 is moved to a target position corresponding to the motion of the hand 21 of a user. The control unit 108, by analyzing the position of the pointer 11, may be able to determine if the pointer 11 is positioned at an edge of the screen 51, or if the pointer 11 is positioned at a reference domain in a certain range while having the current position of the pointer 11 as a reference.

Hereinafter, a control method of the display apparatus 1 in accordance with an exemplary embodiment will be described in detail.

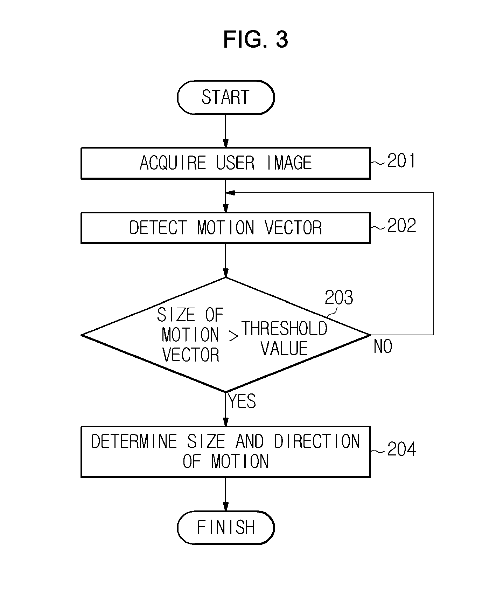

FIG. 3 is a flow chart illustrating a method of sensing the motion of a user of the display apparatus of FIG. 1 according to an exemplary embodiment.

Referring to FIG. 3, at operation 201, the image acquiring unit 105 acquires an image of a user positioned at a front of the display apparatus 1.

Next, at operation 202, the image processing unit 106 detects the motion vector of the domain at which motion is present on the user image. At this time, the motion of a user, as described above, may be the motion of the hand of the user.

Next, at operation 203, the image processing unit 106, by comparing the size of the detected motion vector with a predetermined threshold value, determines if the size of the motion vector is larger than the predetermined threshold value. Then, at operation 204, the image processing unit 106, if the size of the sensed motion vector is larger than the predetermined threshold value, analyzes the motion vector to determine the size and the direction of the motion of the hand 21 of a user.

FIG. 4 is a drawing illustrating an example of moving a pointer of the display apparatus of FIG. 1 according to an exemplary embodiment.

Referring to FIG. 4, in a case when the hand 21 of a user is moved, the image sensor 61 acquires the image of the hand 21 of the user being moved, and the image processing unit 106 senses the motion of the hand 21 of the user from the acquired user image. As one example, the image processing unit 106 may be able to sense the size of the motion of the horizontal direction (mX) and the size of motion of the vertical direction (mY) of the hand 21 of a user.

The control unit 108 calculates a target position of the pointer 11 in response to the motion of the hand 21 of a user. As one example, the control unit 108 may be able to calculate the size of the motion of the horizontal direction (nX) and the size of the motion of the vertical direction (nY) for the pointer 11 to move from the current position to the target position. At this time, the size of motion toward a right side in a horizontal direction or moving toward an upper side in a vertical direction is defined as a positive value of motion, and the size of motion toward a left side in a horizontal direction or moving toward a lower side in a vertical direction is defined as a negative value of motion.

The control unit 108 controls the pointer 11 being currently displayed on the screen 51 to move to the target position in response to the motion of the hand 21 of a user. Here, the position of the hand 21 of the user is generally related to a center 22 of the palm of the user, and the position of the pointer 11 is generally related to a position 12 of an edge of an upper end of the left side of the pointer 11.

In FIG. 4, the shape of the pointer 11 is illustrated as an arrow, but the shape of the pointer 11 is not limited to being in the shape of an arrow, and may be represented as various other shapes, such as a pen, a hand of a human being, an hourglass, etc.

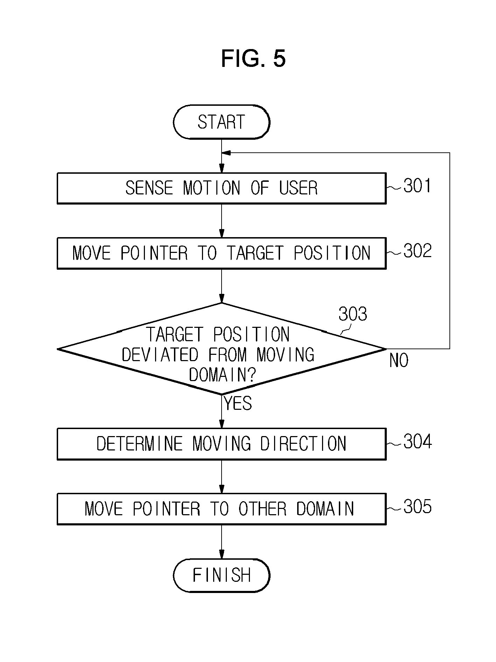

FIG. 5 is a flow chart illustrating a method of moving the pointer of the display apparatus of FIG. 1 according to an exemplary embodiment.

By referring to FIG. 5, in operation 301, the image processing unit 106 senses the motion of a user.

Next, in operation 302, the control unit 108 controls the pointer 11 on the screen 51 to move to the target position according to the sensed motion of the user. The control unit 108 may control the pointer 11 to move only in at least one moving domain that is predetermined. Here, the case of the pointer 11 being moved only in the at least one moving domain may be defined as a jump mode, and the case of the pointer 11 being moved at all positions on the screen 51 may be defined as a free mode. The shape of the pointer 11 in the jump mode and the shape of the pointer 11 in the free mode may be displayed differently.

The control unit 108, before moving the pointer 11 in the jump mode, moves the pointer 11 in the free mode when a reference time elapses after the display apparatus 1 is turned ON, and from the point of time when the pointer 11 is positioned at the predetermined at least one moving domain after being moved freely, the control unit 108 controls the pointer 11 to move in the jump mode.

In the jump mode of the pointer 11, the control unit 108 may control the moving speed of the pointer 11 to move slower than a standard speed. In addition, the control unit 108 may reduce the moving size of the pointer 11 that corresponds to the motion size of a user's motion. Accordingly, even in a case when the pointer 11 is moved in the jump mode, the sensitivity with respect to the motion of the user may be adjusted, and thus the pointer 11 may be able to be moved smoothly.

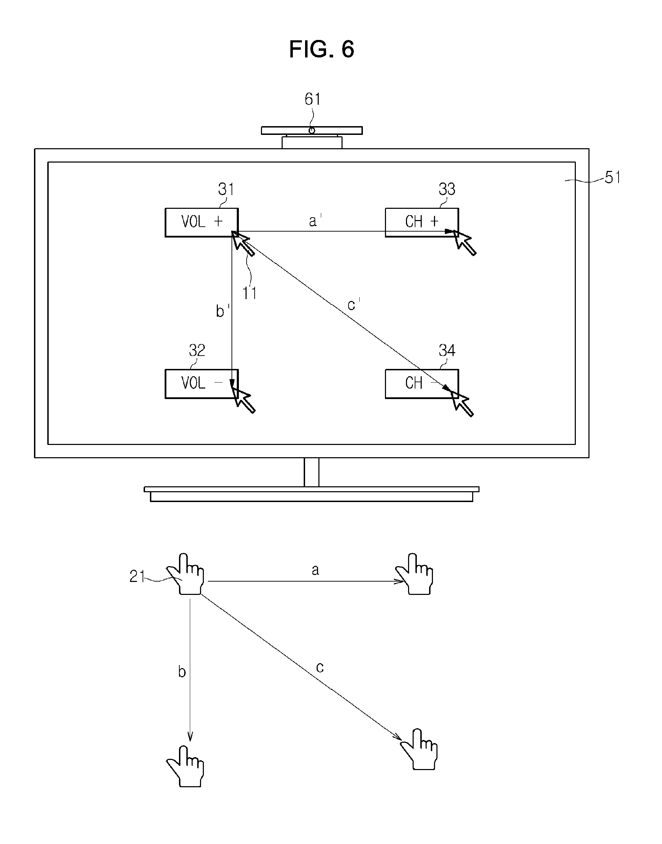

A method of moving the pointer 11 in the moving domain according to an exemplary embodiment will be described in more detail with reference to FIG. 6.

Referring to FIG. 6, the pointer 11 being displayed on the screen 51, as described above, is moved only in the at least one predetermined moving domain. As one example, the moving domain is at least one graphic image that is being displayed on the screen 51 of the display apparatus 1, and may be a domain for volume buttons 31 and 32 or a domain for channel buttons 33 and 34.

The control unit 108, in a case when the pointer 11 is being moved from the at least one moving domain to at least one other moving domain, may control the pointer 11 to move through jumping. As illustrated in FIG. 6, the control unit 108, in a case when the pointer 11 is currently positioned at the volume increasing button 31, controls the pointer 11 to move (a') to the channel increasing button 33 by jumping according to a motion (a) of the hand 21 of a user in the horizontal direction, or may control the pointer 11 to move (b') to the volume decreasing button 32 by jumping according to a motion (b) of the hand 21 of a user in the vertical direction, while the control unit 108 may also control the pointer 11 to move (c') to the channel decreasing button 34 by jumping according to the motion (c) of the hand 21 of a user in the diagonal direction.

According to exemplary embodiments, the pointer 11 being moved by jumping is distinguished from the pointer 11 being generally moved. In more detail, the control unit 108, when the pointer 11 is being moved in the at least one moving domain, controls the pointer 11 to move to the target position that corresponds to the position of the hand 21 of a user by tracking the motion of the hand 21 of the user. However, when the pointer 11 is moved by jumping, the control unit 108 controls the pointer 11 to randomly move to a random position in the at least other moving domain without tracking the motion of the hand 21 of the user.

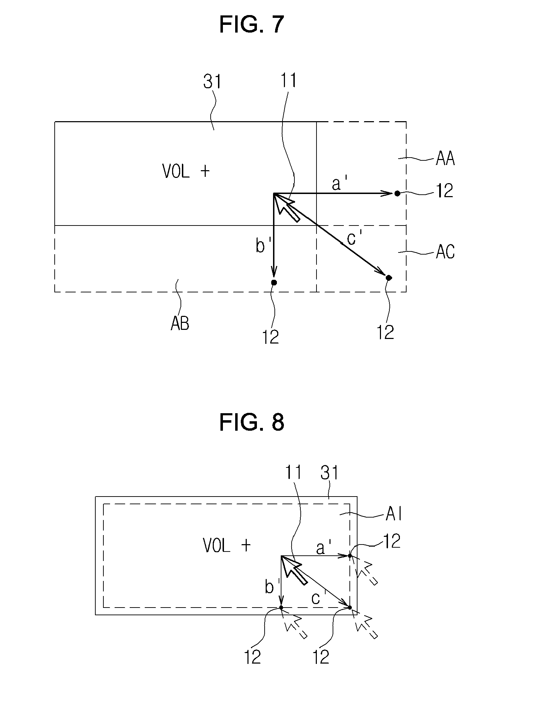

Next, in operation 303, the control unit 108 determines if the target position of the pointer 11 is deviated from the at least one moving domain, and if the control unit 108 determines that the target position of the pointer 11 is deviated from the at least one moving domain, then at operation 304, the control unit 108 determines the moving direction of the pointer 11. By determining the moving direction of the pointer 11 at operation 304, the control unit 108 determines a moving domain to which the pointer 11 is desired to be moved. A method of determining the deviation of the target position of the pointer 11 from the moving domain and determining the moving direction of the pointer 11 according to an exemplary embodiment will be described with reference to FIGS. 7 to 8.

Referring to FIG. 7, at least one reference domain is positioned at an outer portion of the at least one moving domain to determine the jump-moving direction of the pointer 11.

As one example, a reference domain having a rectangular shape is positioned at the outer portion of the volume increasing button 31 at which the pointer 11 is currently positioned. In more detail, a first reference domain (AA) is positioned in the horizontal direction of the domain of the volume increasing button 31, a second reference domain (AB) is positioned in the vertical direction of the domain of the volume increasing button 31, and a third reference domain (AC) is positioned in the diagonal direction of the domain of the volume increasing button 31.

In a case when the target position 12, to which the pointer 11 is desired to be moved (a') according to the motion (a) of the hand 21 of a user in the horizontal direction, is the first reference domain (AA), the control unit 108 determines the jump-moving direction of the pointer 11 to be in the horizontal direction toward a right side, and controls the pointer 11 to be jump-moved to the domain of the channel increasing button 33. In the same manner, in a case when the target position 12, to which the pointer 11 is desired to be moved (b') according to the motion (b) of the hand 21 of a user in the vertical direction, is the second reference domain (AB), the control unit 108 determines the jump-moving direction of the pointer 11 to be in the vertical direction toward a lower side, and controls the pointer 11 to be jump-moved to the domain of the volume decreasing button 32. In a case when the target position 12, to which the pointer 11 is desired to be moved (c') according to the motion (c) of the hand 21 of a user in the diagonal direction, is the third reference domain (AC), the control unit 108 determines the jump-moving direction of the pointer 11 to be in the diagonal direction toward a lower-right side, and controls the pointer 11 to be jump-moved to the domain of the channel decreasing button 34.

Referring to FIG. 8, a reference domain in which the pointer 11 is being moved in the jump mode is positioned at an inner portion of the at least one moving domain. The control unit 108 controls the pointer 11 to be moved in the reference domain, as well as in the moving domain.

As one example, a reference domain (AI) having the shape of a rectangle is positioned inside of the domain of the volume increasing button 31 at which the pointer 11 is currently positioned. Accordingly, the pointer 11 is not only moved in the moving domain but also moved in the reference domain (AI) that is positioned inside the moving domain.

When the position 12 of the pointer 11 is positioned at an edge on the right side of the reference domain (AI) by being moved (a') according to the motion (a) of the hand 21 of a user in the horizontal direction, the control unit 108 determines the jump-moving direction of the pointer 11 to be in the horizontal direction toward a right side, and may control the pointer 11 to be jump-moved to the domain of the channel increasing button 33. In the same manner, with respect to the motion (b) of the hand 21 of a user in the vertical direction, the control unit 108 may determine the jump-moving direction of the pointer 11 to be in the vertical direction toward a lower side.

When the position of the pointer 11 is positioned at a vertex in a lower-right side direction of the reference domain (AI) by being moved (c') according to the motion (c) of the hand 21 of a user in the diagonal direction, the control unit 108 may determine the jump-moving direction of the pointer 11 to be in the diagonal direction toward a lower-right side. In addition, even in a case when the position of the pointer 11 is positioned at a predetermined range in a lower end of an edge of the right side of the reference domain (AI), that is, at a predetermined range at a right end of an edge of the lower side of the reference domain (AI), the control unit 108 may determine the jump-moving direction of the pointer 11 to be in the diagonal direction toward a lower-right side.

In addition, the control unit 108 may adjust the moving speed of the pointer 11 being jump-moved in the horizontal direction to be different from the moving speed of the pointer 11 being jump-moved in the vertical direction. For example, in a case when the pointer 11 is being jump-moved from the domain of the volume increasing button 31 to the domain of the channel increasing button 33, since the moving distance is relatively far, the moving speed may be adjusted to be relatively faster, and in a case when the pointer 11 is being jump-moved from the domain of the volume increasing button 31 to the domain of the volume decreasing button 32, since the moving distance is relatively short, the moving speed may be adjusted to be relatively slower.

Next, at operation 305, the control unit 108 controls the pointer 11 to be moved to a random position of the at least one other moving domain according to the determined moving direction. The position of the at least one other moving domain, as one example, may be a central portion of the moving domain. As the pointer 11 is being moved to the at least one other moving domain, at least one graphic effect may be used.

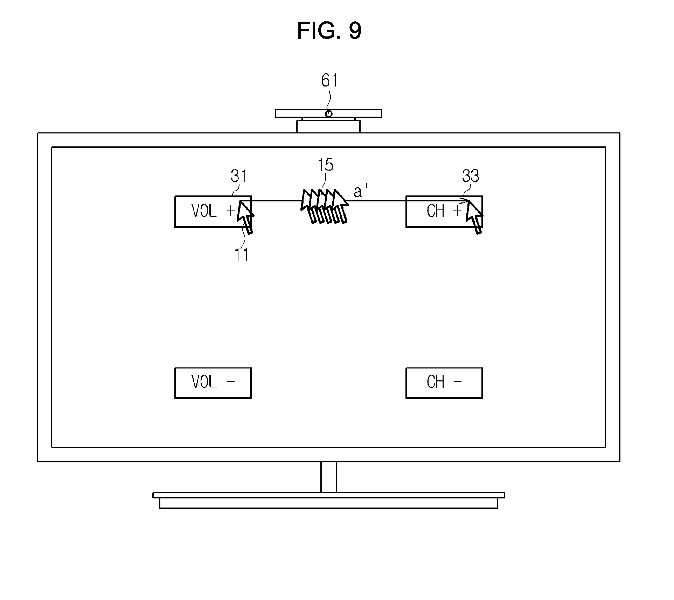

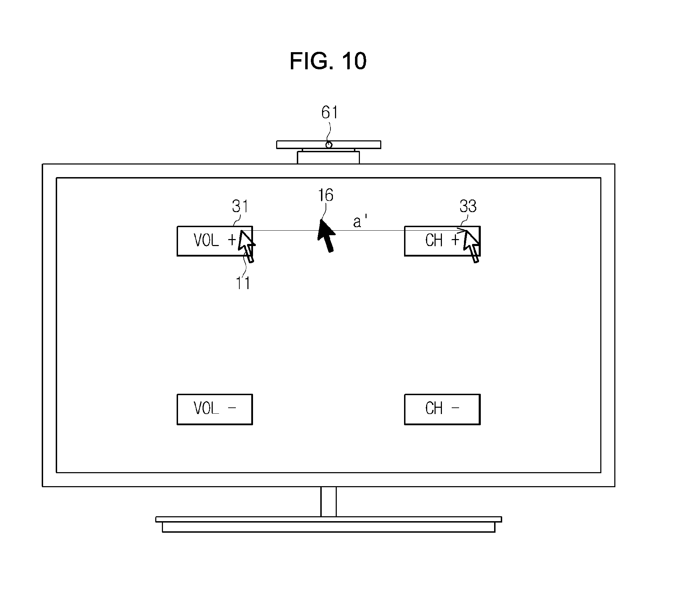

As one example, by referring to FIGS. 9 to 10, as the pointer 11 is being jump-moved from the domain of the volume increasing button 31 to the domain of the channel increasing button 33, the following graphic effect may be used. That is, as the pointer 11 is being moved (a') in the horizontal direction, as illustrated in FIG. 9, the pointer 11 may be moved by displaying a trace 15 of the pointer 11, or as illustrated in FIG. 10, the pointer 11 may be moved by displaying a shadow 16 of the pointer 11. Furthermore, according to other exemplary embodiments, the graphic effect being used when the pointer 11 is being moved may be implemented as many other different types of graphic effects which may be generated using technology known to those skilled in the art.

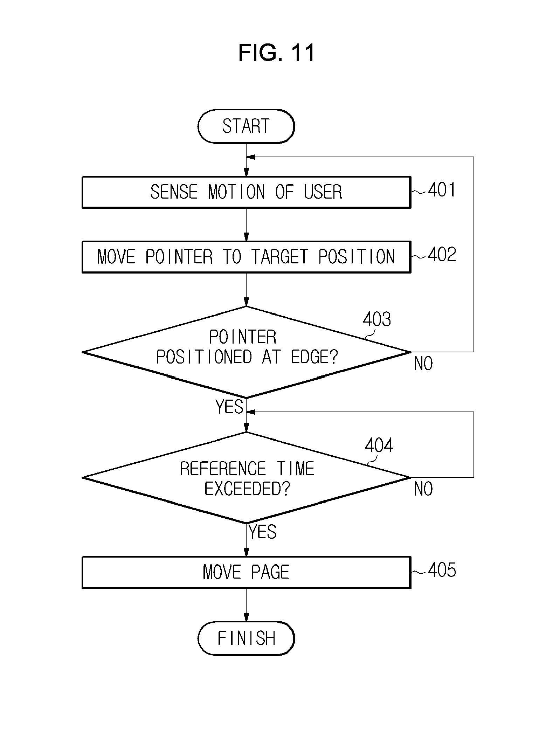

FIG. 11 is a flow chart illustrating a method of moving the page of a screen of the display apparatus of FIG. 1 according to an exemplary embodiment. With reference to the processes that overlap with the processes of FIG. 5, detailed descriptions thereof will be omitted.

Referring to FIG. 11, at operation 403, the control unit 108 determines if the pointer 11 is positioned at an edge of the screen 51. At this time, the pointer 11 may be positioned at an edge on the left side of the screen 51, at an edge on the right side of the screen 51, at an edge on the upper side of the screen 51, or at an edge on the lower side of the screen 51.

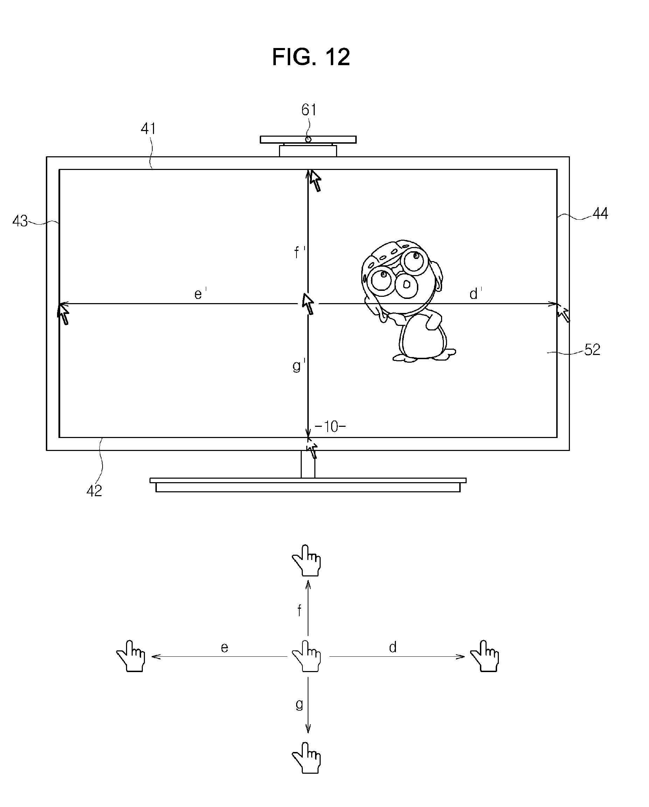

Referring to FIG. 12, the pointer 11 may be positioned on at least one edge of the screen 51 according to the motion of the hand 21 of a user. As one example, in a case when the hand 21 of the user is moved (e) from a current position to a left side of the screen 51, the pointer 11 may be moved (e') in the horizontal direction according to the size of the motion of the hand 21 of the user so as to be positioned at an edge of the left side 43 of the screen 51. In the same manner, in a case when the hand 21 of a user is moved (d) from a current position to a right side of the screen 51, the pointer 11 may be moved (d') in the horizontal direction according to the size of the motion of the hand 21 of the user so as to be positioned at an edge of the right side 44 of the screen 51. In a case when the hand 21 of a user is moved (f) from a current position to an upper side of the screen 51, the pointer 11 may be moved (f) in the vertical direction according to the size of the motion of the hand 21 of the user so as to be positioned at an edge of the upper side 41 of the screen 51, and in a case when the hand 21 of a user is moved (g) from a current position to a lower side of the screen 51, the pointer 11 may be moved (g') in the vertical direction according to the size of the motion of the hand 21 of the user so as to be positioned at an edge of the lower side 42 of the screen 51.

According to exemplary embodiments, as described above, the position of the pointer 11 is related to the position of the upper end of the left side of the pointer 11, and thus, in a case when the pointer 11 is positioned at the edge of the right side 44 of the screen 51 or at the edge of the lower side 42 of the screen 51, the pointer 11 may not be displayed at the screen 51. Further, it is understood that the position of the pointer 11 is not limited to being related to the position of the upper end of the left side of the pointer 11, and may instead be related to the position of other parts of the pointer 11.

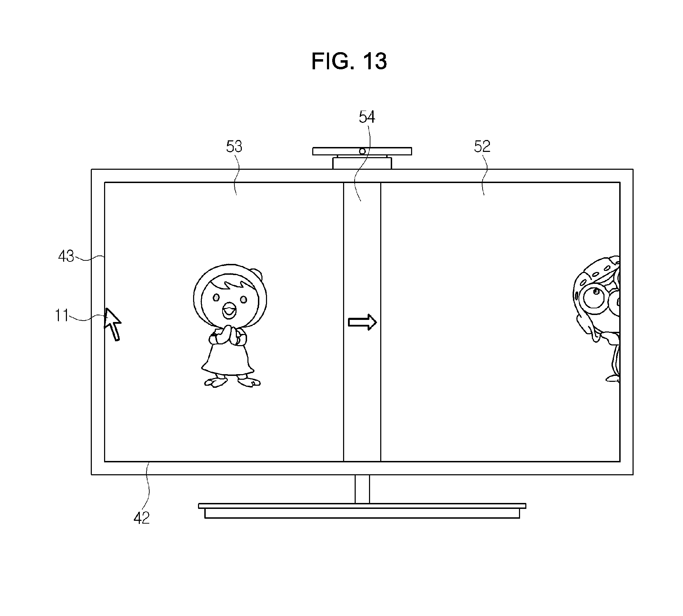

Next, at operation 404, if the control unit 108 determines that the pointer 11 is positioned at an edge of the screen 51, the control unit 108 determines if the time during which the pointer 11 remains at an edge of the screen 51 exceeds a reference time. At operation 405, if the reference time is exceeded, the control unit 108 controls the page of the screen 51 to be moved according to the position of the pointer 11 after the reference time is exceeded. That is, the pointer 11 performs a page scroll operation (enters a page scroll mode). As one example, when the pointer 11 is positioned at an edge of the left side of the screen 51 or at an edge of the upper side of the screen 51, the control unit 108 moves the current page of the screen 51 to a previous page, and in a case when the pointer is positioned at an edge of the right side of the screen 51 or at an edge of the lower side of the screen 51, moves the current page of the screen 51 to a next page. At this time, a method of moving the page of the screen 51 according to an exemplary embodiment will be described in detail with reference to FIGS. 13 to 14.

Referring to FIGS. 13 to 14, on the screen 51 of the display apparatus 1, various contents may be displayed. According to exemplary embodiments, the contents may include a drawing, a document, or an image, and the contents may be configured to include pages which may be moved. For example, in a case when the content is a document, the page is defined depending on the standards of the document, and in a case when the content is a drawing or a group of images, the page is defined in such a manner that a previous drawing or a previous image with respect to the current drawing or current image may be defined as a previous page, while a next drawing or a next image with respect to the current drawing or current image may be defined as a next page.

As the page of the contents being displayed on the screen 51 is being moved to the previous page or to the next page, at least one graphic effect may be used. As one example, when the pointer 11 is positioned at the edge of the left side 43 of the screen 51 during a reference time, the page of the contents is moved and the following graphic effect may be used.

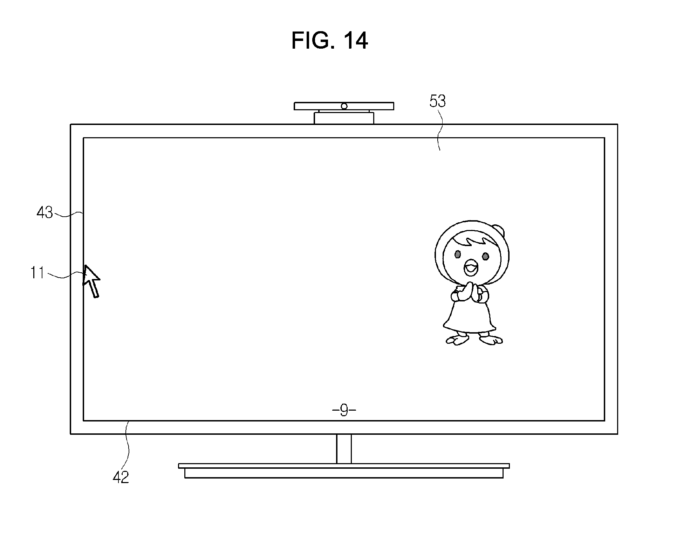

As the page of the contents is being moved to the previous page, as illustrated in FIG. 13, a current page 52 of the contents disappears in a sliding manner toward the right side of the screen 51, and a previous page 53 may be displayed to appear from the left side of the screen 51 in a sliding manner. At this time, in between the current page 52 and the previous page 53, a domain 54 configured to distinguish the pages may be displayed on the screen 51. As illustrated on FIG. 14, the current page 52 of the contents disappears from the screen 51, while the previous page 53 of the contents may be displayed by i on the screen 51. It is understood that many other types of graphic effects may be used as the page of the contents is being moved according to other exemplary embodiments, and these other types of graphic effects may be implemented using technology known to those skilled in the art.

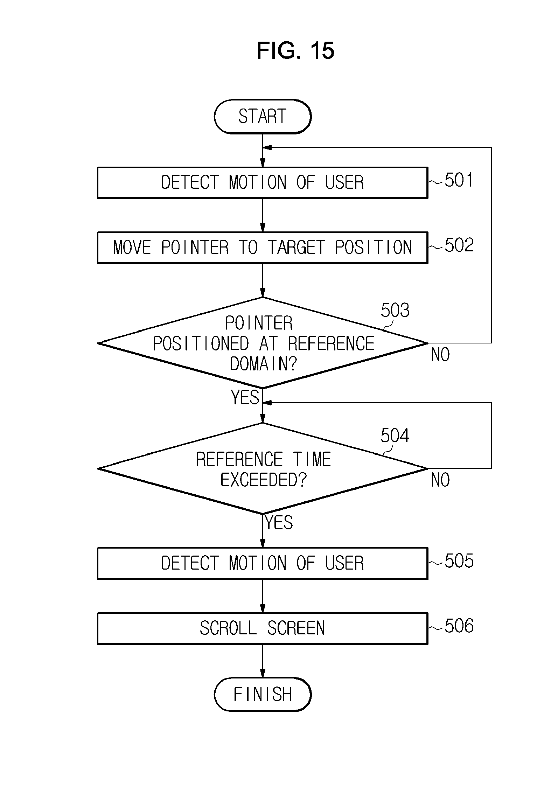

FIG. 15 is a flow chart illustrating a method of scrolling the screen of the display apparatus of FIG. 1 according to an exemplary embodiment. With respect to the processes overlapping with the processes described in connection with FIGS. 5 to 11, detailed descriptions thereof will be omitted.

Referring to FIG. 15, at operation 503, the control unit 108 determines if the pointer 11 is positioned at the reference domain. If the control unit 108 determines that the pointer 11 is positioned at the reference domain, the control unit 108 also determines, at operation 504, if the time during which the pointer 11 remains at the reference domain exceeds a reference time.

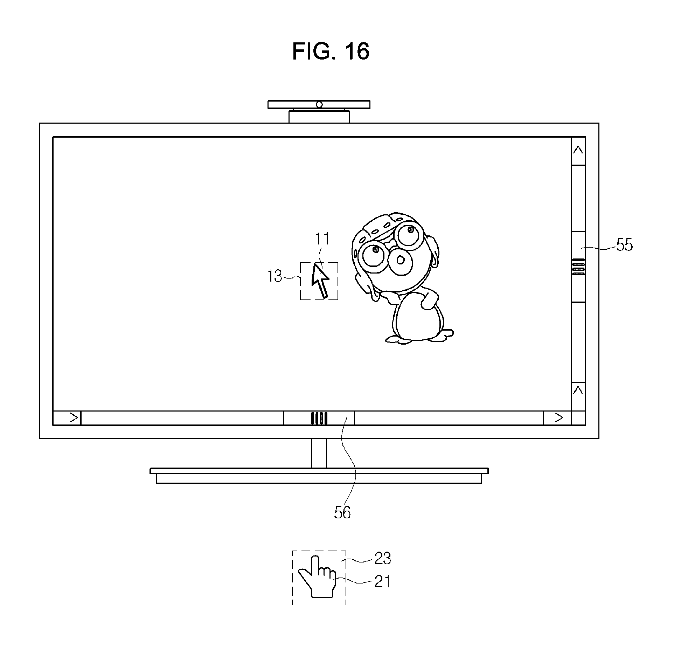

Referring to FIG. 16, when the hand 21 of a user is not moved or is moved within a certain range 23, the pointer 11 being displayed at the screen 51 is not moved or is moved within a certain range 13. If the pointer 11 is positioned at the reference domain 13, which corresponds to a certain range of the current position of the pointer 11 during a reference time, the screen 51 may be scrolled according to the target position of the pointer 11 after an elapse of the reference time. At this time, at the right side of the screen 51 and at the lower side of the screen 51, scroll bars 55 and 56 configured to scroll the screen 51 may be displayed.

Next, at operation 505, after an elapse of the reference time, the image processing unit 106 senses the motion of a user, and, at operation 506, the control unit 108 controls the screen 51 to be scrolled according to the target position of the pointer 11. As one example, in a case when the target position of the pointer 11 is in the left side direction from the current position of the pointer 11, the control unit 108 scrolls the screen 51 toward the right side, and in a case when the target position of the pointer 11 is in the right side direction from the current position of the pointer 11, the control unit 108 scrolls the screen 51 toward the left side. In the same manner, the control unit 108 may scroll the screen 51 toward the upper side of the screen 51 and toward the lower side of the screen 51.

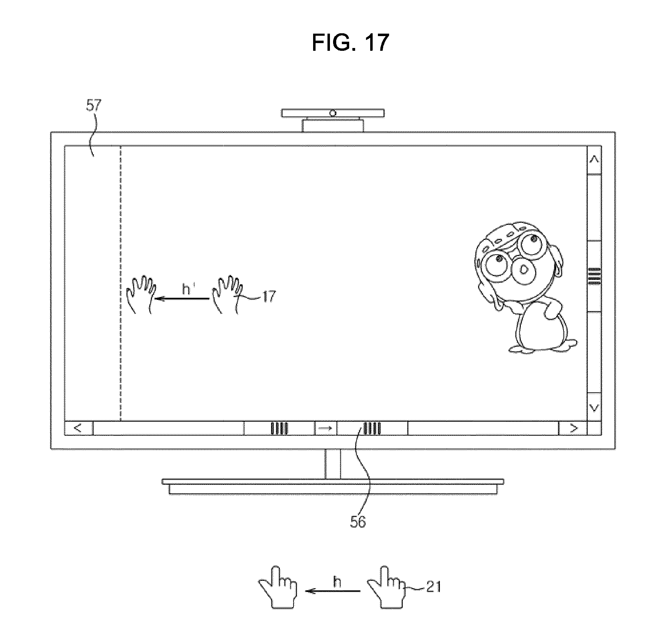

As the screen 51 is scrolled according to the target position of the pointer 11, at least one graphic effect may be used. As one example, by referring to FIGS. 17 to 18, in a case when the target position of the pointer 11 is in the left side direction (h') from the current position of the pointer 11, and the pointer 11 is moved toward the left side direction according to the motion (h) of the hand 21 of a user, the following graphic effect may be used.

As the screen 51 is scrolled toward the right side, as illustrated in FIG. 17, a left side image 57, which has not previously been displayed on the screen 51, appears, and the right side image of the contents which have been previously displayed on the screen 51 disappears. In addition, in order to display to a user that the pointer 11 is currently in a process of performing a wheel scroll mode, the pointer 11 may be displayed in a different shape 17 corresponding to the wheel scroll mode. The pointer having the different shape 17 may be moved (h') to the target position according to the motion of the hand 21 of a user.

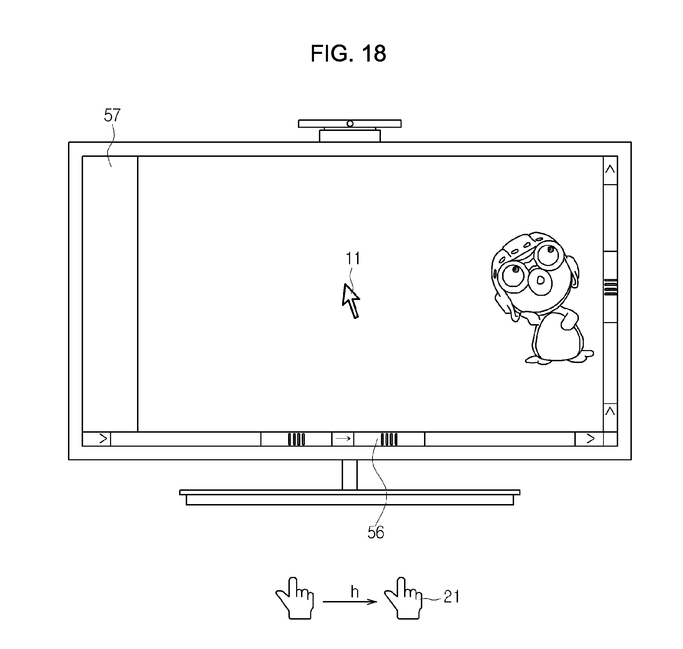

In addition, as illustrated in FIG. 18, when the shape of the current pointer 11 is maintained, the screen 51 may be scrolled toward the right side according to the motion (h) of the hand 21 of a user toward the right side direction. At this time, the scroll bar 56 being displayed at the lower side of the screen 51 is moved toward an opposite direction to a scroll direction of the screen 51, that is, toward an opposite direction to the motion (h) of the hand 21 of the user. Furthermore, according to other exemplary embodiments, various other types graphic effects may be used to scroll the screen 51 according to technology known to those skilled in the art.

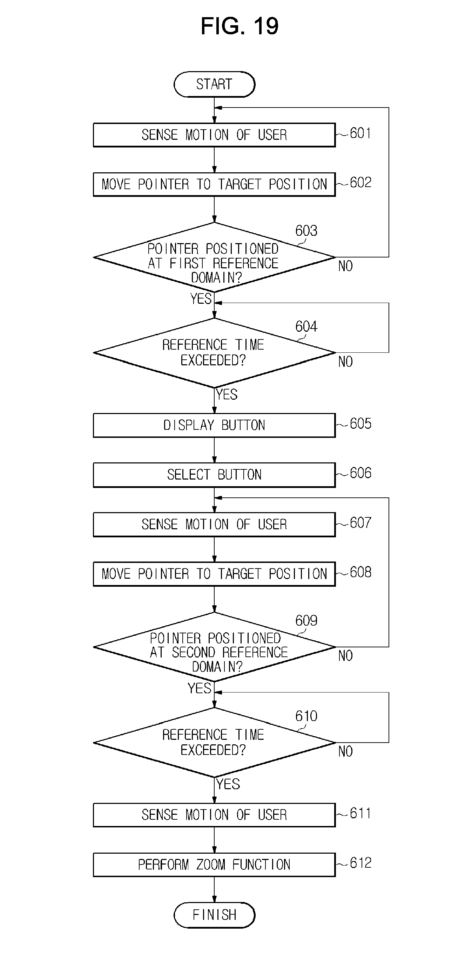

FIG. 19 is a flow chart illustrating a method of performing a wheel scroll function in a state when a button of the display apparatus of FIG. 1 is being selected according to an exemplary embodiment. With respect to the processes that overlap with the processes described in connection with FIG. 5 and FIGS 11 to 15, detailed descriptions thereof will be omitted.

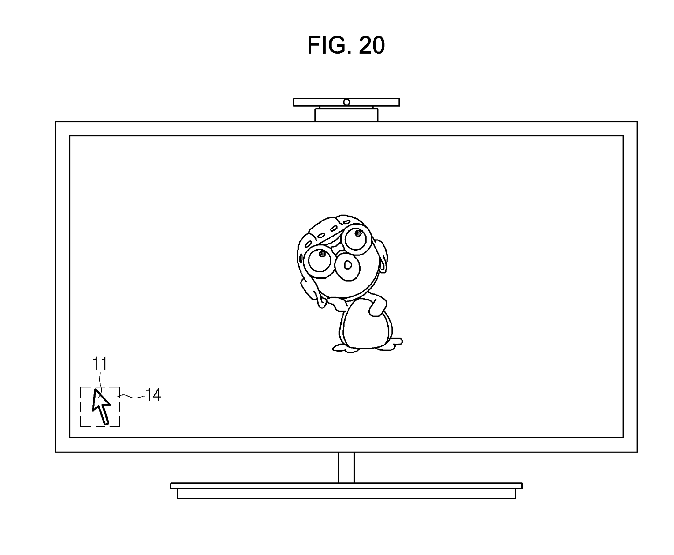

Referring to FIG. 19, at operation 603, the control unit 108 determines if the pointer 11 is positioned at the first reference domain. If the control unit 108 determines that the pointer 11 is positioned at the first reference domain, the control unit 108 also determines, at operation 604, if the time during which the pointer 11 remains at the first reference domain exceeds the reference time. According to exemplary embodiments, the first reference domain, as illustrated in FIG. 20, may be a domain positioned at an outer portion of the screen 51 at which the pointer 11 is not positioned at frequently.

Next, if the pointer 11 is positioned at the first reference domain during the reference time, at operation 605, the control unit 108 may display a predetermined button, as at least one graphic image on at least one domain of the screen 51.

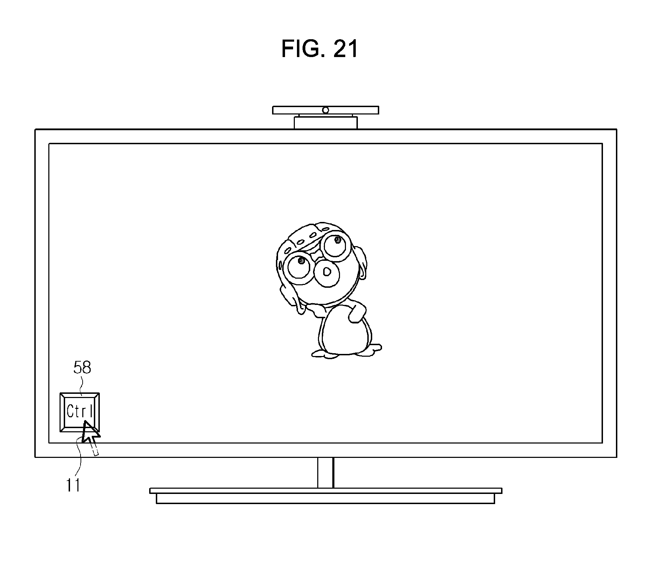

As illustrated in FIG. 21, the control unit 108 may allow a graphic image 58 to be displayed in the first reference domain 14 at which the pointer 11 is positioned. Here, the predetermined button, as one example, may be a Shift button, a Ctrl button, or an Alt button being used as a function of a short cut key. Hereinafter, in the exemplary embodiment described below, the description will be made in relation the predetermined button being the Ctrl button.

Next, at operation 606, at least one button is selected (clicked) according to the motion of the hand 21 of a user. According to exemplary embodiments, in a case when the hand 21 of the user makes a motion that is same as a selecting motion that is stored in advance, a button may be selected. Alternatively, other methods than the method described above may be used to select the button using technology known to those skilled in the art, according to other exemplary embodiments.

Next, at operation 607, the image processing unit 106 senses the motion of a user, and at operation 608, the control unit 108 moves the pointer 11 to the target position according to the sensed motion. At operation 609, the control unit 108 determines if the pointer 11 is positioned at the second reference domain. At this time, the second reference domain, as illustrated in FIG. 16, may be the same as a reference domain 13 configured to determine if the screen 51 of the display apparatus 1 is to be scrolled. If the control unit 108 determines that the pointer 11 is positioned at the second reference domain, then at operation 610, the control unit 108 determines if the time during which the pointer 11 remains at the reference domain 13 exceeds a reference time.

Next, if the control unit 108 determines that the time during which the pointer 11 remains at the reference domain 13 exceeds the reference time, then at operation 611, after an elapse of the reference time, the image processing unit 106 senses the motion of a user, and then, at operation 612, the control unit 108 performs a wheel scroll function of the pointer 11 according to the target position of the pointer 11 in a state when a button is selected. As one example, in a case when the Ctrl button is selected, a zoom function may be performed according to the wheel screen motion of the pointer 11.

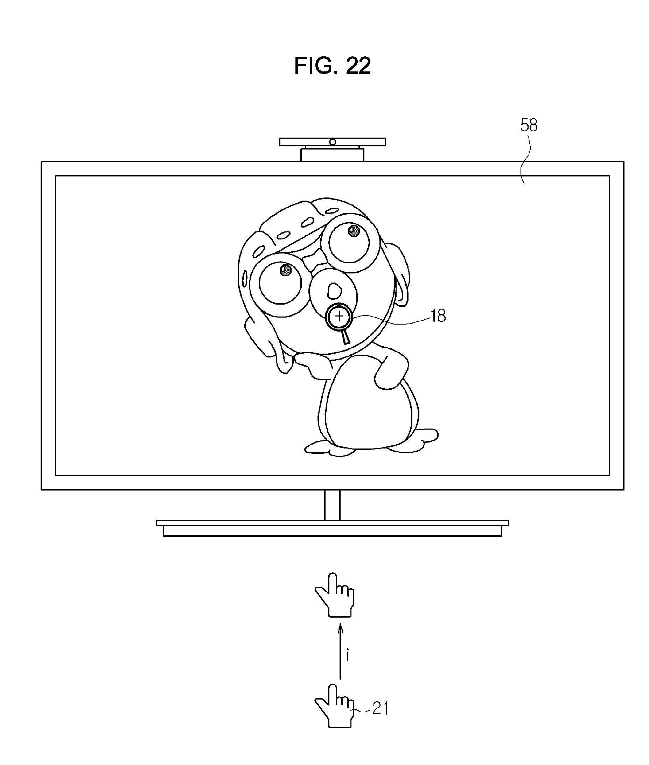

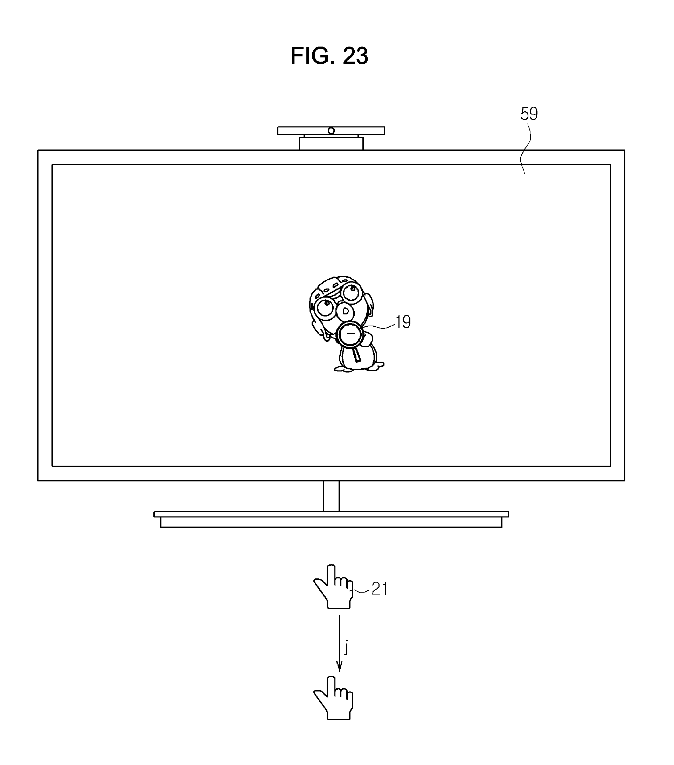

According to the above, as illustrated on FIG. 22, as the hand 21 of a user is moved (i) in the upper side direction, an enlarged image 58 of the contents may be displayed on the screen 51. At this time, in order to notify a user that a zoom-in mode is being performed, the pointer 11 may be displayed in a shape 18 that corresponds to the zoom-in mode. In addition, as illustrated in FIG. 23, as the hand 21 of a user is moved (j) in the lower side direction, a miniature image 59 of the contents may be displayed on the screen 51. At this time, in order to notify a user that a zoom-out mode is being performed, the pointer 11 may be displayed in a shape 19 that corresponds to the zoom-out mode.

Although a few exemplary embodiments have been shown and described, it would be appreciated by those skilled in the art that changes may be made in these exemplary embodiments without departing from the principles and spirit of the disclosure, the scope of which is defined in the claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A display apparatus, comprising:
an image acquiring unit configured to acquire a user image;
an image processing unit configured to sense a motion of a user from the user image,
and
a control unit configured to control a pointer displayed on a screen of the display apparatus to be moved to a target position in response to the sensed motion of the user.

2. The display apparatus of claim 1, wherein:
when the target position is deviated from at least one moving domain in which the pointer is located, the control unit is further configured to control the pointer to be moved to at least one other moving domain.

3. The display apparatus of claim 2, wherein:
when the target position is positioned in a reference domain among a plurality of reference domains that are positioned at an outer portion of the at least one moving domain, the control unit determines a moving direction of the pointer according to a position of the at least one reference domain in which the target position is positioned.

4. The display apparatus of claim 2, wherein:
when the target position is positioned at an edge of a reference domain that is positioned at an inner portion of the at least one moving domain, the control unit determines a moving direction of the pointer according to a position of the edge of the reference domain.

5. The display apparatus of claim 1 wherein the control unit is further configured to control the screen to be scrolled according to the target position.

6. The display apparatus of claim 5, wherein the control unit allows the screen to be scrolled according to the target position when the pointer is positioned at the reference domain of the screen for a period of time a reference time.

7. The display apparatus of claim 6, wherein:
the control unit fixes a position of the pointer, and allows the screen to be scrolled according to the target position.

8. The display apparatus of claim 1, wherein:
the control unit, when the pointer is positioned at the edge of the screen for a period of time a reference time, is configured to allow the page of the screen to be moved according to a position of the pointer.

9. The display apparatus of claim 8, wherein:
the control unit, when the pointer is positioned at a left side edge or at an upper side edge of the screen, is configured to allow the page of the screen to a previous page, and when the pointer is positioned at a right side edge or at a lower side edge of the screen, is configured to move the page of the screen to a next page.

10. The display apparatus of claim 1, wherein the control unit allows at least one button to be displayed on a first reference domain when the pointer is positioned on the first reference domain of the screen.

11. The display apparatus of claim 10, wherein the control unit allows the screen to be zoomed according to the target position when the pointer is positioned at a second reference domain of the screen for a period of time a reference time after the at least one button is selected.

12. The display apparatus of claim 11, wherein the control unit fixes a position of the pointer, and allows the screen to be zoomed according to the target position.

13. A method of controlling a display apparatus, the method comprising:
sensing a motion of a user from a user image;
moving a pointer displayed on a screen to a target position in response to the sensed motion of the user ; and
scrolling the screen according to the target position.

14. The method of claim 13, wherein:
the scrolling of the screen comprises fixing a position of the pointer.

15. The method of claim 13, further comprising:
moving, when the target position is deviated from at least one moving domain, the pointer to at least one other moving domain;
wherein, in the moving of the pointer to the at least one other moving domain, when the target position is positioned on at least one reference domain that is positioned at an outer portion of the at least one moving domain, a moving direction of the pointer is determined according to a position of the at least one reference domain, and/or
in the moving of the pointer to the at least one other moving domain, when the target position is positioned on an edge of a reference domain that is positioned at an inner portion of the at least one moving domain, a moving direction of the pointer is determined according to a position of the edge of the reference domain.
